(19) Europäisches Patentamt

European Patent Office

Office européen des brevets

(11) **EP 1 108 271 B1**

(12) **EUROPÄISCHE PATENTSCHRIFT**

(45) Veröffentlichungstag und Bekanntmachung des Hinweises auf die Patenterteilung:
**23.06.2004 Patentblatt 2004/26**

(21) Anmeldenummer: **99946046.2**

(22) Anmeldetag: **27.08.1999**

(51) Int Cl.7: **H01M 10/40**, H01M 4/62, H01M 4/04

(86) Internationale Anmeldenummer:
**PCT/EP1999/006313**

(87) Internationale Veröffentlichungsnummer:
**WO 2000/013249 (09.03.2000 Gazette 2000/10)**

(54) **PASTÖSE MASSEN FÜR ELEKTROCHEMISCHE BAUELEMENTE UND DARAUS HERGESTELLTE SCHICHTEN UND ELEKTROCHEMISCHE BAUELEMENTE**

PASTE-LIKE MASSES FOR ELECTROCHEMICAL COMPONENTS, LAYERS PRODUCED THEREFROM, AND ELECTROCHEMICAL COMPONENTS

MATIERES PATEUSES POUR COMPOSANTS ELETROCHIMIQUES, ET COUCHES ET COMPOSANTS ELECTROCHIMIQUES REALISES A L'AIDE DE TELLES MATIERES

(84) Benannte Vertragsstaaten:
**AT BE CH CY DE DK ES FI FR GB GR IE IT LI LU MC NL PT SE**

(30) Priorität: **28.08.1998 DE 19839217**

(43) Veröffentlichungstag der Anmeldung:
**20.06.2001 Patentblatt 2001/25**

(73) Patentinhaber: **Fraunhofer-Gesellschaft zur Förderung der angewandten Forschung e.V. 80686 München (DE)**

(72) Erfinder:
• **BIRKE, Peter D-25524 Itzehoe (DE)**

• **NEUMANN, Gerold D-25469 Halstenbeck (DE)**

(74) Vertreter: **Olgemöller, Luitgard, Dr. et al Leonhard - Olgemöller - Fricke, Patentanwälte, Postfach 10 09 57 80083 München (DE)**

(56) Entgegenhaltungen:
| | |
|---|---|
| **EP-A- 0 379 372** | **EP-A- 0 557 250** |
| **WO-A-95/16285** | **WO-A-96/38868** |
| **WO-A-98/26468** | **US-A- 5 456 000** |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft neuartige Materialien mit elektrochemischen Eigenschaften, und zwar insbesondere pastöse Massen, aus diesen Massen herstellbare selbsttragende oder auf einem Substrat aufliegende Schichten und daraus hergestellte Schichtverbünde, die als Akkumulatoren, elektrochrome Elemente oder dergleichen verwendbar sind. insbesondere betrifft die Erfindung wiederaufladbare elektrochemische Zellen auf Festkörperbasis.

Seit Beginn der siebziger Jahre hat man versucht, elektrochemische Bauelemente wie Akkumulatoren oder dergleichen in Form dünner Schichten zu erzeugen. Das Ziel ist es, Folienverbünde zu erhalten, die einerseits so flexibel sind, daß man sie beispielsweise aufrollen oder einer anderen gewünschten Form anpassen kann, und die andererseits durch eine extrem hohe Kontaktfläche zwischen den einzelnen elektrochemischen Bestandteilen wie Elektroden und Elektrolyten, bezogen auf das eingesetzte Volumen an elektrochemisch aktivem Material, besonders günstige Lade- und Entladeeigenschaften aufweisen.

Um derartige Elektrodenmaterialien herzustellen, ist man bisher von festem oder zähflüssigem Teflon ausgegangen, welches mit einem gewissen Prozentsatz Kohlenstoff und dem eigentlichen Elektrodenmaterial gemischt und dann auf geeignete Ableitelektroden gepreßt oder aufgesprüht wurde. Dabei entstehen jedoch Schichten ungenügender Flexibilität. Des weiteren wurde vorgeschlagen, Elektrodenschichten herzustellen, die mit PVC und Tetrahydrofuran oder einem anderen in einem Lösungsmittel gelösten Polymer hergestellt wurden, aus dem das Lösungsmittel anschließend ausgetrieben wurde. Allerdings ist die Leitfähigkeit der hergestellten Produkte ungünstig.

Besondere Probleme bereitet die Herstellung einer Schicht, die in einem entsprechenden elektrochemischen Verbund als Elektrolyt fungieren kann. Die US 5 456 000 beschreibt wiederaufladbare Batteriezellen, die durch Laminierung von Elektroden- und Elektrolytzellen erzeugt werden. Als positive Elektrode wird ein Film oder eine Membran eingesetzt, die getrennt aus LiMn$_2$O$_4$-Pulver in einer Matrix-Lösung aus einem Copolymeren hergestellt und anschließend getrocknet wurde. Die negative Elektrode besteht aus einer getrockneten Beschichtung einer pulverisierten Kohlenstoff-Dispersion in einer Matrix-Lösung eines Copolymeren. Zwischen den Elektrodenschichten wird eine Elektrolyt/Separatormembran angeordnet. Hierfür wird einPoly(vinylidenfluorid)-Hexafluorpropylen-Copolymeres mit einem organischen Plastifizierer wie Propylencarbonat oder Ethylencarbonat umgesetzt. Aus diesen Bestandteilen wird ein Film erzeugt, und anschließend wird der Plastifizierer aus der Schicht herausgelöst. In diesem "inaktiven" Zustand wird die Batteriezelle gehalten, bis sie ihrer Benutzung zugeführt werden soll. Um sie zu aktivieren, wird sie in eine geeignete Elektrolytlösung eingetaucht, wobei sich die durch das Austreiben des Plastifiziermittels gebildeten Kavitäten mit dem flüssigen Elektrolyten füllen. Anschließend ist die Batterie gebrauchsfertig.

Nachteilig an einem derartigen Konstrukt ist es, daß die Batterie nicht länger in aufgeladenem Zustand aufbewahrt werden kann, da an den Grenzflächen Korrosion auftritt (siehe mündliche Mitteilung A. Blyr et al., 4$^{th}$ Euroconference on Solid State Ionics, Connemara, Irland, September 1997, zur Veröffentlichung vorgesehen). Der Einsatz eines Flüssigelektrolyten bringt also Stabilitätsprobleme an den Phasengrenzen im Schichtverbund mit sich. Ein weiterer Nachteil ist es, daß die entsprechende Batterie in einer auslaufsicheren Gehäusung angeordnet werden muß.

Es ist auch bereits versucht worden, Elektrolyte in fester Form zu verwenden. Hierfür wurde vorgeschlagen, ionenleitende organische polymere Materialien (sog. echte Polymerelektrolyte) zu verwenden. So beschreibt das US Patent 5 009 970 den Einsatz eines gelförmigen Produktes, das durch Umsetzung eines festen Polyethylenoxid-Polymers mit Lithiumperchlorat und anschließendes Bestrahlen erhalten wurde. Das US Patent 5 041 346 beschreibt eine oxymethylenvemetzte Variante dieser Polymerelektrolyten, in der zusätzlich ein Weichmacher enthalten ist, der vorzugsweise ionensolvatisierende Eiganschaften aufweist, z. B. ein dipolares aprotisches Solvens wie g-Butyrolacton sein kann. Allerdings ist berichtet worden, daß die Ionenleitfähigkeit im Vergleich zu reinem festen Lithiumsalz zwar drastisch erhöht ist, für den Einsatz als Elektrolytschicht in elektrochemischen Bauelememten jedoch nicht ausreicht.

Ein weiterer Versuch betraf ähnliche Polymerelektrolyte. Hierfür wurden Poly(vinylfluorid)-Polymere und verwandte Fluorkohlenstoff-Copolymeren mit Triflurethylen oder Tetrafluorethylen eingesetzt. In diese Polymere wurden Lithiumsalze und zusätzlich organische Solventien eingearbeitet, die sowohl mit den Polymeren als auch mit den Salz-Bestandteilen kompatibel waren (Tsuchida et al., Elektrochimica Acta, Band 28 (1983, Seiten 591 ff und Seiten 833 ff). Allerdings erhielt man hierbei eine brauchbare Ionenleitfähigkeit von mehr als etwa 10$^{-5}$S/cm nur bei erhöhten Temperaturen, da, wie die Autoren selbst berichten, diese Mischung nicht homogen blieb, sondern Salz- und Polymerkristallite ausbildete. Forschungen in diese Richtung wurden daher später als nicht erfolgsversprechend eingestuft (siehe US 5 456 000, Spalte 2, Zeilen 31 bis 33).

**Aufgabe** der vorliegenden Erfindung ist die Bereitstellung von Massen für die Herstellung elektrochemischer Bauelemente in Form von dünnen Schichtverbünden, die die genannten nachteiligen Eigenschaften nicht aufweisen. Insbesondere sollen die erfindungsgemäßen Massen bei der Verarbeitung zu Schichten bzw. Schichtverbünden mit elektrochemischen Eigenschaften Produkte wie wiederaufladbare Batterien (Akkumulatoren), elektrochrome Bauelemente oder dergleichen liefern, die eine hohe Flexibilität und sehr gute Elektronen- und Ionenleitungseigenschaften aufweisen und die darüber hinaus nicht auslaufen können und daher nicht notwendigerweise in Gehäusen, insbesondere in dichtenden Gehäusen, angeordnet werden müssen.

Diese Aufgabe wird dadurch gelöst, daß erfindungsgemäß in elektronischen Bauelementen verwendbare, pastöse Massen bereitgestellt werden, die eine heterogene Mischung aus (A) einer mindestens ein organisches Polymer, dessen Vorstufen oder dessen Präpolymere enthaltenden oder hieraus bestehenden Matrix und (B) einem elektrochemisch aktivierbaren, in der Matrix nicht löslichen, anorganischen Material in Form einer Festsubstanz umfaßt.

Der Ausdruck "in elektrochemischen Bauelementen verwendbar" impliziert dabei, daß das elektrochemisch aktivierbare anorganische Material in Form einer Festsubstanz ein ionenleitendes oder elektronenleitendes Material sein muß, das sich als, Elektrodenmaterial oder Festelektrolyt eignet.

Damit zwischen den einzelnen Körnern der in die Matrix (A) eingebetteten elektrochemisch aktivierbaren Festsubstanz (B) ein ausreichender elektrischer Kontakt gewährleistet ist, ist erfindungsgemäß mindestens eine weitere Bedingung zu erfüllen. Es hat sich nämlich gezeigt, daß die im Stand der Technik beschriebenen schlechten Leitfähigkeiten überwunden werden können, wenn die Masse eine ausreichende Menge an elektrochemisch aktivierbarer Festsubstanz enthält. Ausreichende oder sogar sehr gute Leitfähigkeiten werden dann erzielt, wenn der Volumenanteil der elektrochemisch aktivierbaren Festsubstanz so hoch ist, daß er in etwa dem gefüllten Raum in einer theoretischen dichtesten Kugelpackung entspricht. Da natürlich Parameter wie Größe und äußerliche Gestalt der elektrochemisch aktivierbaren Festsubstanz (B) eine Rolle spielen, kann der Minimalwert je nach eingesetzten Materialien etwas schwanken. Es ist jedoch empfehlenswert, mindestens 60 Volumen-Prozent an Festsubstanz (B) einzusetzen, bevorzugt sind es mind. etwa 65, und ganz besonders bevorzugt mind. etwa 70 Volumen-Prozent. Die Obergrenze ist nicht kritisch, sie hängt vor allem von den Eigenschaften der Matrix (A) ab. Hat diese eine sehr gute Klebwirkung, so kann man unter Umständen bis zu 90 Vol.-%, in Ausnahmefällen sogar bis zu 95 Vol.-% Festsubstanz (B) in die pastöse Masse der Erfindung einarbeiten.

Ein ausreichender elektrischer Kontakt zwischen den Körnern der Festsubstanz (B) kann jedoch alternativ oder zusätzlich auch dadurch erreicht werden, daß ein zweiter Ionen- und/oder Elektronenleiter (oder ein homogener, gemischter Leiter, je nach benötigter Art der Leitfähigkeit) (C) eingesetzt wird, der zumindest an den Komgrenzen zwischen (A) und (B) als dünne Schicht vorhanden ist.

Sofern die Festsubstanz (B) ein Elektrodenmaterial ist, sind weitere Bedingungen gemäß Anspruch 1 Variante (a) oder (b) einzuhalten.

Die Erfindung wird auch durch Figuren näher erläutert, wobei

> **Figur 1** die Abfolge eines erfindungsgemäßen Schichtverbundes mit elektrochemischen Eigenschaften zeigt,

> **Figur 2** einen Schichtverbund gemäß Figur 1 in aufgerolltem Zustand zeigt,

> **Figur 3** schematisch Lade- und Entladekurven einer erfindungsgemäßen Ausgestaltung in Lithiumtechnologie mit der wie in Figur 1 gezeigten Abfolge der Schichten zeigt und

> die **Figuren 4a und 4b** (letztere mit ausschnittsvergrößerten Zyklen) Lade- und Entladekurven (Spannung/Zeit) erfindungsgemäßer Akkumulatoren zeigen (negative Elektrode: Graphit, positive Elektrode: Lithiumcobaltoxid).

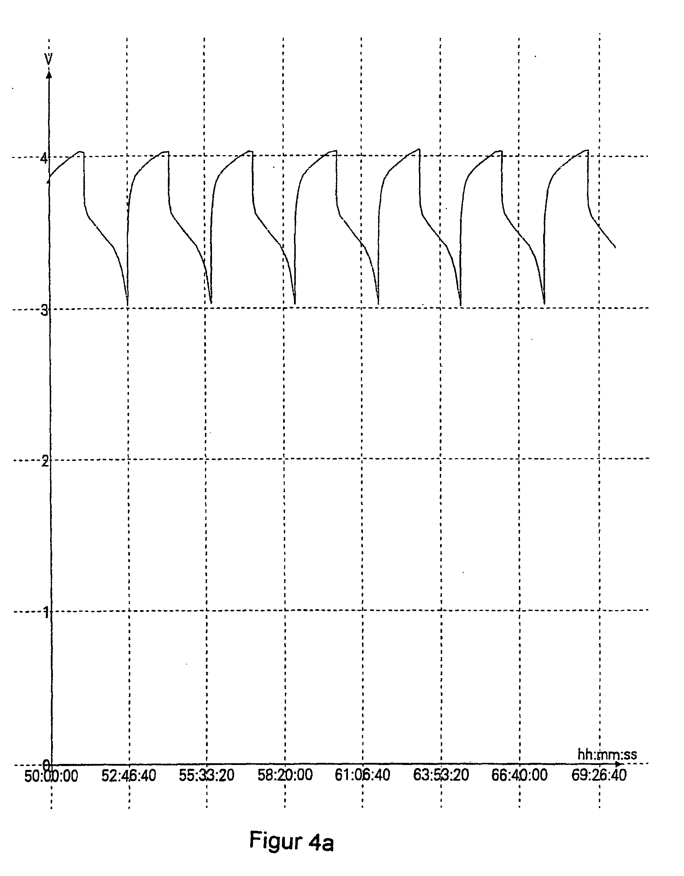

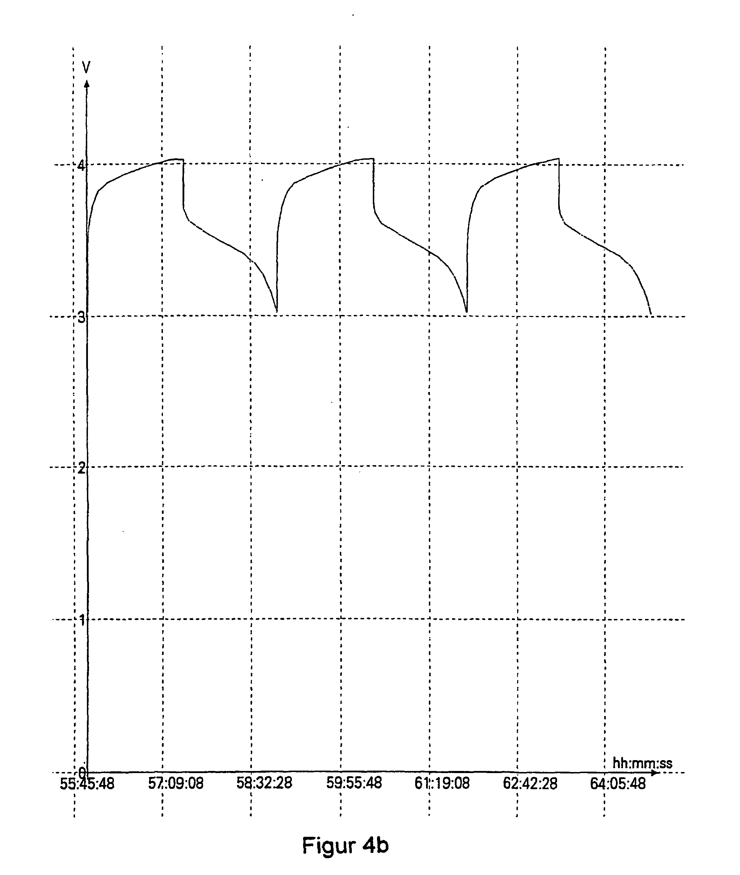

Überraschenderweise konnte festgestellt werden, daß aufgrund der der Erfindung zugrundeliegenden Maßnahmen gemäß Anspruch 1 die zwangsläufig auftretenden irreversiblen Verluste beim Laden und Entladen deutlich verringert werden. Ladung und Entladung sind, wie aus den **Fig. 4a** und **4b** zu ersehen ist, symmetrisch und reproduzierbar.

Die Masse erhält ihre pastöse Konsistenz durch die Verwendung einer geeigneten Matrix (A). Der Ausdruck "pastös" soll dabei bedeuten, daß die Masse nach ihrer Herstellung mit Hilfe von gängigen Pastenauftragsverfahren verarbeitbar ist, beispielsweise aufgestrichen, aufgespachtelt, aufgerakelt oder mit diversen Druckverfahren auf einem Untergrund aufgebracht werden kann. Je nach Bedarf kann sie dabei relativ dünnflüssig bis sehr zäh gehalten werden.

Für die Matrix (A) kann eine Vielzahl von Materialien verwendet werden. Dabei kann man mit lösungsmittelfreien oder lösungsmittelhaltigen Systemen arbeiten. Als lösungsmittelfreie Systeme eignen sich beispielsweise vernetzbare, flüssige oder pastöse Harzsysteme. Beispiele hierfür sind Harze aus vernetzbaren Additionspolymeren oder Kondensationsharzen. So können beispielsweise Vorkondensate von Phenoplasten (Novolake) oder Aminoplasten eingesetzt werden, die nach Ausformen der pastösen Masse zur Schicht eines elektrochemischen Schichtverbundes endvernetzt werden. Weitere Beispiele sind ungesättigte, beispielsweise durch Pfropf-Copolymerisation mit Styrol vernetzbare Polyester, durch bifunktionelle Reaktionspartner härtbare Epoxiharze (Beispiel: Bisphenol-A-Epoxiharz, kalt gehärtet mit Polyamid), vernetzbare Polycarbonate wie durch ein Polyol vemetzbares Polyisocyanurat, oder binäres Polymethylmethacrylat, das ebenfalls mit Styrol polymerisiert werden kann. Die pastöse Masse wird dabei jeweils aus dem mehr oder weniger zähflüssigen Vorkondensat bzw. unvernetzten Polymer als Matrix (A) oder unter Verwendung wesentlicher Bestandteile davon, zusammen mit der Komponente (B), gebildet.

Eine andere Möglichkeit ist die Verwendung von Polymeren oder Polymer-Vorstufen zusammen mit einem Lösungs- oder Quellmittel für das organische Polymer, sofern es sich bei der Festsubstanz (B) nicht um ein Elektrodenmaterial handelt. Im Prinzip besteht hier keine Beschränkung bezüglich der einsetzbaren synthetischen oder natürlichen Polymere. Nicht nur Polymere mit Kohlenstoff-Hauptkette sind möglich, sondern auch Polymere mit Heteroionen in der Hauptkette wie Polyamide, Polyester, Proteine oder Polysaccharide. Die Polymere können Homo- oder Copolymere sein; die Copolymere können statistische Copolymere, Pfropfcopolymere, Blockcopolymere oder Polyblends sein; eine Beschränkung ist hier nicht gegeben. Als Polymere mit reiner Kohlenstoff-Hauptkette sind beispielsweise natürliche oder synthetische Kautschuke verwendbar. Besonders bevorzugt sind fluorierte Kohlenwasserstoff-Polymere wie Teflon, Polyvinylidenfluorid (PVDF) oder Polyvinylchlorid, da hiermit bei den aus der pastösen Masse gebildeten Folien oder Schichten besonders gute wasserabweisende Eigenschaften erzielt werde können. Dies verleiht den damit erzeugten elektochemischen Bauelementen eine besonders gute Langzeitstabilität. Weitere Beispiele sind Polystyrol oder Polyurethan. Als Beispiele für Copolymere seien Copolymere von Teflon und amorphem Fluorpolymer sowie Polyvinylidenfluorid/Hexafluorpropylen (im Handel als Kynarflex erhältlich) genannt. Als Beispiele für Polymere mit Heteroatomen in der Hauptkette seien Polyamide vom Diamin-Dicarbonsäure-Typ oder vom Aminosäure-Typ, Polycarbonate, Polyacetale, Polyether und Acrylharze genannt. Weitere Materialien umfassen natürliche und synthetische Polysacharide (Homo- und Heteroglykane), Proteoglykane, beispielsweise Stärke, Cellulose, Methylcellulose. Auch Substanzen wie Chondroitinsulfat, Hyaluronsäure, Chitin, natürliche oder synthetische Wachse und viele andere Substanzen können eingesetzt werden. Zusätzlich können auch die vorgenannten Harze (Präkondensate) in Lösungs- bzw. Verdünnungsmitteln verwendet werden.

Lösungs- bzw. Quellmittel für die vorgenannten Polymere sind dem Fachmann bekannt.

Unabhängig davon, ob die Matrix (A) ein Lösungs- oder Quellmittel enthält oder nicht, kann ein Plastifiziermittel (auch Weichmacher) für das bzw. die eingesetzten Polymere vorhanden sein. Unter "Plastifizierer" oder "Weichmacher" sollen hier Substanzen verstanden werden, deren Moleküle durch Nebenvalenzen (Van-der-Waats-Kräfte) an die Kunststoffmoleküle gebunden werden. Sie verringern dadurch die Wechselwirkungskräfte zwischen den Makromolekülen und setzen damit die Erweichungstemperatur und die Sprödigkeit und Härte der Kunststoffe herab. Dies unterscheidet sie von Quell- und Lösungsmitteln. Aufgrund ihrer höheren Flüchtigkeit lassen sie sich üblicherweise auch nicht durch Abdampfen aus dem Kunststoff entfernen, sondern müssen ggf. durch ein entsprechendes Lösungsmittel herausgelöst werden. Das Einarbeiten eines Plastifizierers bewirkt eine hohe mechanische Flexibilität der aus der pastösen Masse erzeugbaren Schicht.

Der Fachmann kennt geeignete Weichmacher für die jeweiligen Kunststoffgruppen. Sie müssen mit dem Kunststoff, in den sie eingearbeitet werden sollen, gut verträglich sein. Gängige Weichmacher sind hochsiedende Ester der Phthalsäure oder der Phosphorsäure, beispielsweise Dibutylphthalat oder Dioctyphthalat. Weiterhin eignen sich beispielsweise Ethylencarbonat, Propylencarbonat, Dimethoxyethan, Dimethylcarbonat, Diethylcarbonat, Butyrolacton, Ethylmethylsulfon, Polyethylenglykol, Tetraglyme, 1,3-Dioxolan oder S,S-Dialkyldithiocarbonat.

Wird als Matrix eine Kombination aus Kunststoff und Plastifizierer verwendet, so kann der Plastifizierer (bzw. sollte er, soweit nur die Merkmale der Anspruchsvariante 1b zur Anwendung gelangen) anschließend mit einem geeigneten Lösungsmittel wieder aus der pastösen Masse herausgelöst werden. Die dabei entstehenden Kavitäten werden beim anschließenden Überführen der Masse in eine elektrochemisch aktive oder aktivierbare Schicht durch dabei erfolgende Press- und Laminationsvorgänge zum Zusammenfügen der verschiedenen Schichten geschlossen. Hierdurch wird die elektrochemische Stabilität des geladenen Akkumulators verbessert. Erstrebenswert ist bei Einsatz eines Festelektrolyten in der beschriebenen Kunststoffmatrix eine ionische Leitfähigkeit von mindestens $10^{-4}$S cm$^{-1}$.

Anstelle des späteren Verpressens der Kavitäten können diese auch nach dem Herauslösen des Plastifizierers mit einem zweiten festen Elektrolyt- oder Elektrodenmaterial aufgefüllt werden.

Die vorliegenden, erfindungsgemäßen pastösen Massen und daraus hergestellten Schichten eignen sich, wie bereits erwähnt, für eine Vielzahl elektrochemischer Bauelemente. Der Fachmann kann hierfür dieselben Festsubstanzen (B) auswählen, die er für klassische elektrochemische Bauelemente, d.h. solche ohne den Zusatz von Kunststoffen, verwenden würde.

Beispielhaft seien nachstehend mögliche Festsubstanzen (B) für einen Akkumulator in Lithiumtechnologie genannt:

- untere Ableitelektrode      Al, Cu, Pt, Au, C
- positive Elektrode      LiF, $Li_xNiVO_4$, $Li_x[Mn]_2O_4$, $LiCoO_2$,
     $LiNiO_2$, $LiNi_{0,5}Co_{0,5}O_2$,
     $LiNi_{0,8}Co_{0,2}O_2$, $V_2O_5$, $Li_xV_6O_{13}$
- Elekrolyt (hier Festkörper)      $Li_{1,3}Al_{0,3}Ti_{1,7}(PO_4)_3$,
     $LiTaO_3 \cdot SrTiO_3$, $LiTi_2(PO_4)_3 \cdot LiO_2$,
     $LiH_2(PO_4)_3 \cdot Li_2O$, $Li_4SiO_4 \cdot Li_3PO_4$,

LiX + ROH mit X=Cl, Br, I (1, 2 oder 4 ROH pro LiX).

- Negative Elektrode    Li, $Li_{4+x}Ti_5O_{12}$, $Li_xMoO_2$, $Li_xWO_2$,
      $Li_xC_{12}$, $Li_xC_6$, Lithiumlegierungen
- obere Ableitelektrode    Al, Cu, Mo, W, Ti, V, Cr, Ni

Die vorliegende Erfindung ist aber selbstverständlich nicht auf Akkumulatoren in Lithiumtechnologie beschränkt, sondern umfaßt, wie bereits oben erwähnt, alle diejenigen Systeme, die sich auch "konventioneller" Technik, d. h. ohne Einarbeiten einer organischen Polymermatrix, herstellen lassen.

Nachstehend sollen einige spezielle Ausgestaltungen der pastösen Massen beschrieben werden, die sich für spezielle Bauelemente oder Bauelement-Bestandteile eignen. Soweit die darin eingesetzten elektrochemisch aktivierbaren Bestandteile noch nicht Stand der Technik sind, sollte klar sein, daß diese Substanzen auch in "Bulk-Form", d. h. ohne Polymermatrix, in entsprechenden elektrochemischen Bauelementen eingesetzt werden können.

Durch geeignete Wahl der elektrochemisch aktiven Substanzen lassen sich elektrochemische Bauelemente, beispielsweise Akkumulatoren herstellen, die in den Lade-/Entladekurven Charakteristika aufweisen, mittels derer eine gezielte Kontrolle von Be- und Entladezustand des Akkumulators möglich ist. So können als elektrochemisch aktivierbare Festsubstanz (B) für die positive oder die negative Elektrode Mischungen zweier der voranstehend erwähnten Elektrodenmaterialien oder entsprechender anderer Elektrodenmaterialien eingesetzt werden, die unterschiedliche Oxidations-/Reduktionsstufen besitzen. Eine der beiden Substanzen kann alternativ durch Kohlenstoff ersetzt sein. Dies führt zu charakteristischen Verläufen der Be- und Entladekurven, die eine vorteilhafte Detektion des Be- bzw. Entladezustandes eines unter Verwendung solcher Massen hergestellten Akkumulators ermöglichen. Die Kurven weisen dabei zwei verschiedene Plateaus auf. Wird das dem Entladezustand nähere Plateau erreicht, kann dieser Zustand dem Benutzer angezeigt werden, so daß er weiß, daß er bald eine Wiederaufladung vornehmen muß, und vice versa.

Wird in eine für eine negative Elektrode vorgesehen pastöse Masse Kohlenstoff und ein mit Lithium legierbares Element eingearbeitet, so verleiht dies der daraus herstellbaren Elektrode (mit Eigenschaften einer Legierungs- und einer Interkalationselektrode) eine besonders hohe Kapazität bei verbesserter elektrochemischer Stabilität. Außerdem ist die Volumenausdehnung geringer als bei einer reinen Interkalationselektrode.

Graphit oder amorpher Kohlenstoff (Ruß) bzw. eine Mischung aus beidem kann des weiteren mit Elektrodenmaterial für eine positive oder negative Elektrode in die pastöse Masse eingearbeitet werden. Insbesondere sind hier Gewichtsanteile von 20 bis 80 Gewichts-% amorphem Kohlenstoff, bezogen auf die elektrochemisch aktivierbare Komponente, vorteilhaft. Ist die Masse für eine positive Elektrode vorgesehen, so ist als vorteilhafte Eigenschaft die Schmierwirkung des Kohlenstoffs zu erwähnen, die die mechanische Flexibilität einer aus der pastösen Masse erzeugten Schicht verbessert. Ist die Masse für eine negative Elektrode vorgesehen, so wird zusätzlich die elektrochemische Stabilität und die elektronische Leitfähigkeit verbessert, wie bereits voranstehend beschrieben.

Die erfindungsgemäße pastöse Masse kann auch für andere Elektroden als Interkalationselektroden verwendet werden. Ein Beispiel hierfür ist der Einsatz von Metallpulver in Kombination mit einem Alkali- oder Erdalkalisalz als elektrochemisch aktivierbare Festsubstanz (B). Eine hiermit erzeugte pastöse Masse kann für die Herstellung von Zersetzungselektroden dienen. Damit entfällt die für Interkalaktionselektroden typische Volumenausdehnung, was zu einer verbesserten Alterungsbeständigkeit führt. Als Beispiel hierfür sei die Kombination Kupfer plus Lithiumsulfat genannt.

Eine ganz besondere Elektrodenvariante ist erhältlich, wenn das Elektrodenmaterial (B) ein nicht mit Lithium reagierendes Metall ist und weiterhin ein Lithiumsalz enthält. Die Matrix (A) in dieser Variante wird dabei wie bereits oben beschrieben aus einer Kombination von Kunststoff mit einem Plastifizierer hergestellt, der anschließend wieder aus der pastösen Masse herausgelöst wird. In dieser Variante sollen allerdings die dabei entstehenden Kavitäten nicht bei einem späteren Laminieren der elektrochemisch aktivierbaren Schichten unter Druck oder dgl. geschlossen werden; es ist vielmehr darauf zu achten, daß sie offen bleiben. In Kombination mit einem Lithiumsalz in der benachbarten Elektrolytschicht besitzt eine so zusammengesetzte Elektrode die Eigenschaft, Lithium reversibel in den entstandenen Kavitäten ein- und ausbauen zu können. Sie hat die Vorteile einer Interkalationselektrode, vermeidet jedoch deren Nachteile (z.B. die Volumenausdehnung) und hat aufgrund der großen inneren Oberfläche hervorragende elektrische Eigenschaften. Als Beispiel für ein nicht mit Lithium reagierendes Metall sei Nickel genannt.

Überraschenderweise hat sich auch gezeigt, daß die Einarbeitung eines Phasengemischs, bestehend aus $Li_4SiO_4 \cdot Li_3PO_4$ in die erfindungsgemäße pastöse Masse, unabhängig von deren vorgesehenem elektrochemischem Verwendungszweck, zu einer Verbesserung der Plastizität der daraus erzeugten Elektroden oder Festelekrolyte führt. Voraussetzung hierfür ist, daß das Phasengemisch äußerst fein gemahlen ist. Die extrem geringen Korngrößen dürften die Ursache für eine verbesserte innere Gleitwirkung sein.

Unabhängig davon, ob die Festsubstanz (B) ein Elektrodenmaterial oder ein Elektrolytmaterial ist, kann es aus einem Lithiumionenleiter und einem oder mehreren weiteren Ionenleitem (Li, Cu, Ag, Mg, F, Cl, H) bestehen. Hiermit hergestellte Elektroden und Elektrolyt-Schichten weisen besonders günstige elektrochemische Eigenschaften wie Kapazität, Energiedichte, mechanische und elektrochemische Stabilität auf.

Wenn die pastöse Masse der vorliegenden Erfindung gemäß Anspruch 1(c) zusätzlich einen zweiten festen Ionen-, Elektronen- und/oder einen gemischten Leiter (C) enthalten soll, kann dieser auf verschiedene Weise in die Matrix eingearbeitet werden. Wenn es sich um einen Ionenleiter handelt, der in einem Lösungsmittel löslich ist - etwa demjenigen, in dem auch das Matrixmaterial (A) löslich ist - so kann die Herstellung der pastösen Masse dadurch erfolgen, daß das Lösungsmittel für das Matrixmaterial diesen zweiten Ionenleiter enthält. Der Dampfdruck des Lösungsmittels muß dabei so niedrig sein, daß es in einem späteren Stadium ausgetrieben werden oder verdunsten kann (z.B. nach dem innigen Vermengen der Bestandteile der Masse, wenn diese auch ohne die Anwesenheit des Lösungsmittels eine pastöse Konstistenz aufweist, oder aber nach Erzeugen der Schicht oder Folie). Sofern in einer solchen Ausgestaltung der Erfindung auch ein Plastifizierer vorhanden sein soll, bietet es sich an, einen ebenfalls im Lösungsmittel löslichen Plastifizierer zu wählen, der dann gegebenenfalls mit Hilfe des genannten Lösungsmittels anschließend wieder entfernt werden kann. Diese Ausgestaltung der Erfindung läßt sich auch mit solchen Leitern (C) bewerkstelligen, die eine relativ schlechte Leitfähigkeit (insbesondere Ionenleitfähigkeit, wenn diese Eigenschaft vorhanden sein soll) besitzen.

In einer weiteren Ausgestaltung der Erfindung gemäß Anspruch 1 (c) wird ein Ionen-, Elektronen- oder gemischter Leiter (C) gewählt, der im gewählten Plastifizierer für das System löslich ist. Der Plastifizierer sollte in diesem Fall einen relativ niedrigen Dampfdruck aufweisen. Hier wird beim innigen Vermengen von in Plastifizierer gelöstem Bestandteil (C) mit den weiteren Bestandteilen der pastösen Masse eine modifizierte Korngrenze zwischen den leitenden Bestandteilen erzeugt, die eine gewisse Plastizität aufweist. Die elektrochemisch aktivierbare Festsubstanz (B) darf in dieser Ausgestaltung der Erfindung eine deutlich weniger hohe Leitfähigkeit aufweisen als eine elektrochemisch aktivierbare Festsubstanz (B), die den einzigen elektrochemisch relevanten Bestandteil der Mischung darstellt. Damit lassen sich in dieser Variante auch z. B. quartäre Lithiumionenleiter wie $Li_4SiO_4$-$Li_3PO_4$, $Li_4SiO_4 \cdot Li_2SO_4$ oder $Li4SiO_4 \cdot Li_5AlO_4$ als Komponente (B) einsetzen, die eine ionische Leitfähigkeit der Größenordnung $10^{-6}$ S/cm mit einem hohen Stabilitätsfenster vereinigen. Die Plastizität der Korngrenzen läßt sich weiter steigern, wenn zusätzlich eine Substanz mit hohem Dampfdruck (z. B. Ether oder Dimethoxyethan für Plastifizierer wie Dibutylphthalat) in die pastöse Masse eingearbeitet wird. Das Lösungsmittel wirkt hier als Modifiziermittel für den Plastifizierer. Eine solche Ausgestaltung ist beispielsweise möglich, wenn die Matrix PVC oder PVDF oder andere halogenierte Kohlenwasserstoff-Polymere enthält oder im wesentlichen daraus besteht.

Handelt es sich bei dem Leiter (C) um einen Ionenleiter, so ist es auch möglich, hierfür ein hygroskopisches Salz einzusetzen. In dieser Ausgestaltung der Erfindung wird der Ionenleiter (C) in wasserfreier oder wasserarmer Form in die pastöse Masse eingearbeitet. Während des Verarbeitungsvorgangs (oder durch späteres Lagern in einer feuchtigkeitshaltigen Umgebung) wird Wasser aufgenommen. Dadurch entsteht eine Korngrenze dieses Ionenleiters, die eine gewisse Plastizität aufweist. Wenn der hygroskopische Ionenleiter in der Lage ist, kristalline Hydrate zu bilden, kann durch die Einlagerung des eindiffundierenden Wassers als Kristallwasser in eine feste Korngrenze eine Volumenausdehnung stattfinden, die einen verbesserten Korngrenzenkontakt schafft und durch die schwächere Anbindung des leitenden Ions an die umgebende Hydrathülle auch die ionische Leitfähigkeit des Elektrolyten verbessert (das Kation des Elektrolyten kann sich bis zu einem gewissen Grade in seiner polaren Hülle bewegen). Ein Beispiel für ein derart einsetzbares Salz ist $LiNO_3$.

Wird als Leiter (C), insbesondere für die Erzeugung eines Festelektrolyten, ein hydrolyseunempfindliches Salz eingesetzt, beispielsweise ein Lithiumsalz, ausgewählt unter Perchlorat, den Halogeniden (X=Cl, Br, I), Nitrat, Sulfat, Borat, Carbonat, Hydroxid oder Tetrafluorborat, kann die erfindungsgemäße pastöse Masse sowie die daraus herzustellende elektrochemisch aktivierbare Schicht in vorteilhafter Weise unter Umgebungsatmosphäre hergestellt werden.

Die vorstehend beschriebenen Bestandteile, aus denen die erfindungsgemäße pastöse Masse hergestellt wird, können auf konventionelle Art und Weise vermischt werden. vorzugsweise durch heftiges Rühren oder Verkneten der Bestandteile. Gegebenenfalls werden das organische Polymer oder seine Vorstufen im Lösungs- oder Quellmittel vorgelöst oder vorgequollen, bevor die Komponente (B) zugegeben wird. In einer besonders bevorzugten Ausgestaltung der Erfindung wird die Masse während des Mischvorgangs oder im Anschluß daran einer Ultraschallbehandlung unterzogen. Hierdurch werden die Festsubstanz (B) und gegebenenfalls der Leiter (C) stärker verdichtet, weil die Komgrößen durch Aufbrechen der Kömer herabgesetzt werden. Dies verbessert die elektrischen und elektrochemischen Eigenschaften der pastösen Massen. Man kann die für die Elektroden oder Elektrolyte vorgesehenen Materialien auch vor der Einarbeitung in die Masse einer solchen Ultraschallbehandlung unterziehen, um von vornherein die Komgrößen zu verringern.

Durch das Einbetten der Festsubstanzen (B) in die Matrix (A) entfällt das Sintern der Pulver der elektrochemisch aktivierbaren Substanzen bei hohen Temperaturen, wie es für "konventionelle" elektrochemische Bauelemente üblich ist. Ein solches Sintern würde keine pastöse Konsistenz der Ausgangssubstanzen liefern.

Die erfindungsgemäßen pastösen Massen eignen sich insbesondere für das Erzeugen von Dünnfilm-Batterien und anderen entsprechenden elektrochemischen Bauelementen wie z.B. elektrochromen Bauelementen. Bevorzugt handelt es sich um Bauelemente in der sogenannten "Dickschicht-Technologie". Die einzelnen Schichten dieser Elemente werden auch "Tapes" genannt. Hierfür werden einzelne elektrochemisch aktive bzw. aktivierbare Schichten in einer Dicke von etwa 10 μm bis etwa 1 bis 2 mm erzeugt, aufeinander aufgelegt und in innigen Kontakt gebracht. Der Fachmann wird die der Anwendung gemäße Dicke jeweils entsprechend auswählen. Bevorzugt sind Bereiche von etwa 50 μm bis 500 μm, ganz besonders bevorzugt ein Bereich von etwa 100 μm. Es ist erfindungsgemäß allerdings auch möglich, entsprechende Dünnschicht-Bauelemente herzustellen (dieser Begriff umfaßt Dicken von vorzugsweise 100 nm bis zu einigen μm). Diese Anwendung dürfte aber beschränkt sein, da entsprechende Bauelemente den gängigen Kapazitätanforderungen in einer Vielzahl von Fällen nicht genügen dürften. Denkbar ist allerdings die Anwendung beispielsweise für Backup-Chips.

Die vorliegende Erfindung umfaßt daher weiterhin selbsttragende oder auf einem Substrat aufliegende, elektrochemisch aktive bzw. aktivierbare Schichten, bevorzugt in den angegebenen Dicken, die aus den voranstehend beschriebenen pastösen Massen erzeugt werden können. Die Schichten sind vorzugsweise flexibel.

Zur Erzeugung sowohl der selbsttragenden Schichten (Folien, Tapes) auf der auf einem Substrat aufliegenden Schichten kann auf die üblichen, im Stand der Technik bekannten Verfahren zurückgegriffen werden, die für die entsprechenden Polymermaterialien der Matrix anwendbar sind. Die Verfestigung der pastösen Massen erfolgt dabei je nach Material beispielsweise durch Härten (von Harzen oder anderen Präkondensaten), durch Vernetzen von Präpolymerisaten oder linearen Polymerisaten, durch Abdampfen von Lösungsmittel oder auf ähnliche Art und Weise. Um selbsttragende Folien zu erhalten, kann beispielsweise eine geeignete pastöse Masse auf Kalandern in der geeigneten Dicke ausgeformt werden. Hier kann auf Standardtechnologie verwiesen werden. Selbsttragende Schichten können auch durch Auftragen der pastösen Masse auf ein Substrat und Abziehen der erzeugten Schicht nach ihrer Verfestigung gebildet werden. Voraussetzung ist dabei jeweils, daß das Produkt eine ausreichende Flexibilität besitzt. Die Beschichtung kann mit üblichen Pastenauftragsverfahren durchgeführt werden. Beispielhaft sei hier das Aufstreichen, Aufrakeln, Aufspritzen, Spincoating und dergleichen genannt. Auch Drucktechniken sind möglich.

In einer bevorzugten Ausgestaltung der Erfindung werden vernetzbare Harzmassen (Präkondensate), wie weiter oben für die pastösen Massen beschrieben, eingesetzt und nach Ausformen der Schicht durch UV- oder Elektronenbestrahlung ausgehärtet. Eine Härtung kann natürlich auch thermisch oder chemisch (beispielsweise durch Eintauchen der erzeugten Schicht in ein entsprechendes Bad) bewirkt werden. Gegebenenfalls werden den Massen geeignete Initiatoren oder Beschleuniger oder dgl. für die jeweilige Vernetzung zugesetzt.

Die vorliegende Erfindung betrifft weiterhin Schichtverbünde mit elektrochemischen Eigenschaften, wie insbesondere Akkumulatoren und andere Batterien oder elektrochrome Bauelemente, die durch eine entsprechende Abfolge der obengenannten Schichten gebildet werden oder diese umfassen.

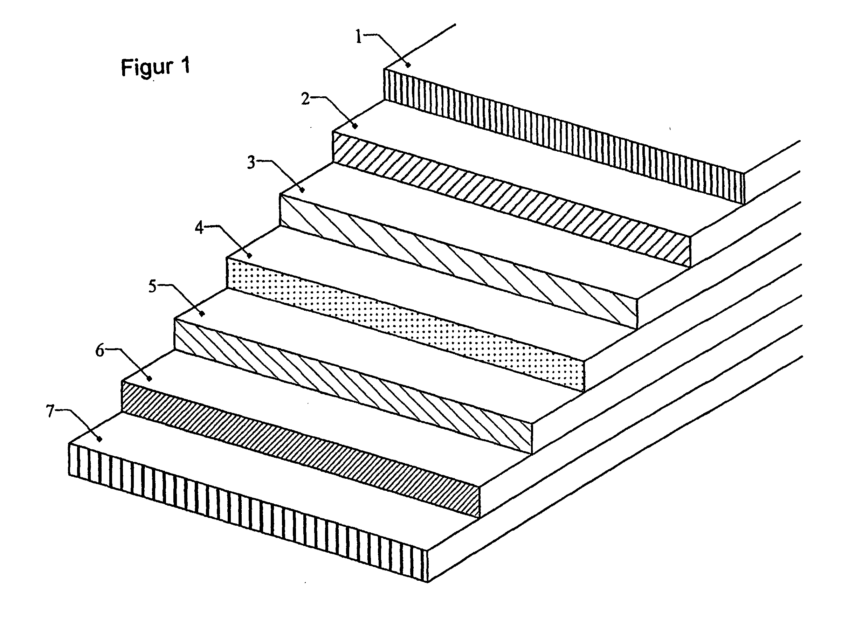

Figur 1 zeigt die Abfolge einer solchen Anordnung. Die Bezugsziffern bedeuten: Ableitelektrode 1, Zwischentape 2, Elektrode 3, Elektrolyt 4, Elektrode 5, Zwischentape 6 und Ableitelektrode 7. Näheres hierzu ist im nachfolgenden Text erläutert.

Für die Herstellung von Schichtverbünden können die einzelnen pastösen Massen Lage für Lage aufeinander mittels Pastenauftragsverfahren aufgebracht werden. Dabei kann entweder jede einzelne Lage für sich vernetzt oder von Lösungsmittel befreit oder auf sonstige Weise in die Schichtform gebracht werden; es kann aber auch eine Verfestigung der einzelnen Matrices durch Vernetzung oder Abdampfen des Lösungsoder Quellmittels oder dergleichen nach Beendigung des Auftragens aller benötigten Schichten vorgenommen werden. Letzteres ist beispielsweise dann vorteilhaft, wenn die einzelnen elektrochemisch aktivierbaren Schichten mit einem Druckverfahren aufgetragen werden, das analog zu einem Vielfarbendruck erfolgt. Als Beispiel hierfür sei die Flexodruck-Technik erwähnt, mit deren Hilfe kontinuierlich mehrere Meter/Sekunde eines Substrats mit den erforderlichen elektrochemisch aktivierbaren Schichten bedruckt werden können.

Alternativ kann jede Schicht oder Folie einzeln in ihren endverfestigten Zustand überführt werden. Handelt es sich um selbsttragende Folien, so können die entsprechenden Bestandteile des zu bildenden Bauelementes anschließend durch Laminierung miteinander verbunden werden. Hierfür können konventionelle Laminiertechniken eingesetzt werden. Genannt sei hier beispielsweise das Extrusionsbeschichten, wobei die zweite Schicht durch Anpreßwalzen mit einer Trägerschicht verbunden wird, Kalanderbeschichten mit zwei oder drei Walzspalten, worin neben der pastösen Masse die Trägerbahn mit einläuft, oder Doublieren (Verbinden unter Druck und Gegendruck von bevorzugt erhitzten Walzen). Der Fachmann wird die entsprechenden Techniken ohne weiteres auffinden, die sich durch die Wahl der Matrices für die jeweiligen pastösen Massen ergeben oder anbieten.

Ein Preßvorgang während des Verbindens (Laminierens) der einzelnen Schichten kann häufig erwünscht sein, nicht nur zum besseren Verbinden (und damit dem Erzielen einer besseren Leitfähigkeit) der einzelnen Schichten, sondern beispielsweise auch, um möglicherweise vorhandene Kavitäten in den einzelnen Schichten zu beseitigen, die beispielsweise wie voranstehend beschrieben durch Auswaschen von Plastifizierer oder dergleichen erzeugt worden sind. Hierfür sind gängie Techniken anwendbar. Vorteilhaft kann eine Kaltverpressung (bei Temperaturen unter 60°C) erfolgen, sofern die eingesetzten Materialien dies erlauben. Ein besonders guter Kontakt der einzelnen Schichten untereinander wird dadurch gewährleistet.

Die elektrochemischen Bauteile, die mit den erfindungsgemäßen pastösen Massen herstellbar sind, sind nicht beschränkt. Die nachstehend beschriebenen Ausgestaltungen sind daher nur als Beispiele oder besonders bevorzugte Ausgestaltungen zu verstehen.

So können wiederaufladbare elektrochemische Zellen in Dickschichttechnologie hergestellt werden, d. h. mit einzelnen, elektrochemisch aktivierbaren Schichten in einer Dicke von etwa 10 μm bis etwa 1 bis 2 mm und bevorzugt von etwa 100 μm. Wenn die elektrochemische Zelle auf der Lithiumtechnologie basieren soll, bieten sich als Festsubstanzen für die jeweiligen Elektroden bzw. Elektrolytschichten diejenigen Substanzen an, die bereits voranstehend hierfür aufgezählt sind. Dabei sind mindestens drei Schichten vorzusehen, nämlich eine solche, die als positive Elektrode fungiert, eine, die als Festkörperelektrolyt fungiert, und eine, die als negative Elektrode fungiert, d.h. die Schichten 3, 4 und 5 der Figur 1.

Erfindungsgemäß hat sich herausgestellt, daß besonders vorteilhafte Stromdichten im Akkumulator erzielt werden, wenn gewisse Grenzbedingungen eingehalten werden. Die Stromdichte läßt sich bekanntlich durch den Widerstand des Elektrolyten einstellen. Ist sie zu hoch gewählt, so können die Elektroden durch Polarisation langfristig zerstört werden; ist sie zu niedrig, so ist die Leistung des hergestellten Akkumulators nur für wenige Einsatzgebiete ausreichend. Die genannte Grenzbedingung liegt vorzugsweise bei 1 mA/cm². Wenn beispielsweise ein Elektrolyt eine Leitfähigkeit von $10^{-4}$ S/cm besitzt, so ist es besonders vorteilhaft, wenn die Elektrolytschicht etwa 100 μm dick ist. Eine Stromdichte von 1 mA/cm² ruft dann nämlich einen durch den Widerstand bedingten Spannungsabfall von vernachlässigbaren 0,1 V hervor. Wenn die Leitfähigkeit des Elektrolyten dagegen beispielsweise $10^{-5}$ S/cm beträgt, kann die Dicke der Elektrolytschicht auf etwa 10 μm gesenkt werden. Es ist daher empfehlenswert, die Schichtdicke d im Verhältnis zur Leitfähigkeit $\sigma_{ion}$ und einem ionischen Widerstand $(\Omega)$ und in Bezug auf die Fläche A so zu wählen, daß die folgende Formel erfüllt wird:

$$200\ \Omega < d/(\sigma_{ion} \cdot A).$$

Die genannte dreischichtige Zelle (oder jedes beliebige andere elektrochemische Bauelement, bestehend aus positiver Elektrode/Elektrolyt/negativer Elektrode) kann zusätzlich mit Ableitelektroden (Schichten 1 und 7 der Figur 1) versehen sein. Diese bestehen zweckmäßigerweise aus Folien der geeigneten Materialien (Materialien für Ableitelektroden, die in der Lithiumtechnologie verwendet werden können, sind weiter vorne beschrieben).

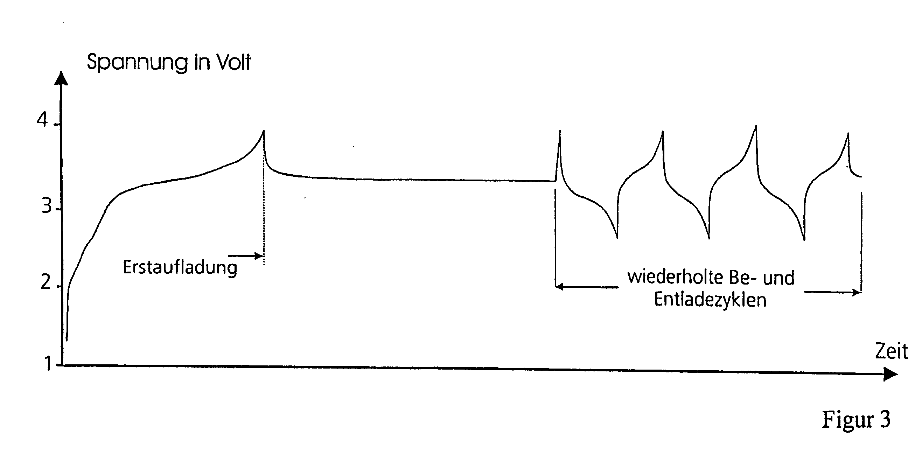

In einer speziellen Ausgestaltung der Erfindung wird zwischen die untere Ableitelektrode und die ihr benachbarte Elektrode sowie die obere Ableitelektrode und die ihr benachbarte Elektrode eine weitere dünne Kunststoffschicht ("Zwischentape", Schichten 2 und 6 der Figur 1) eingearbeitet, die ebenfalls mit Hilfe einer pastösen Masse der vorliegenden Erfindung hergestellt sein kann. Diese dünne Kunststoffschicht sollte leitende, metallische Elemente oder Legierungen aus solchen Elementen enthalten, die geeignet sind, Elektronen vom jeweiligen Elektrodenmaterial auf die jeweilige Ableitelektrode zu transportieren. Beispiele hierfür sind die Elemente Gold, Platin, Rhodium und Kohlenstoff oder Legierungen aus diesen Elementen, wenn die Kunststoffschicht zwischen positiver Elektrode und zugehöriger Ableitelektrode angeordnet werden soll. Wenn sie zwischen negativer Elektrode und Ableitelektrode angeordnet werden soll, sind als Elemente Nickel, Eisen, Chrom, Titan, Molybdän, Wolfram, Vanadium, Mangan, Niob, Tantal, Kobalt oder Kohlenstoff zu nennen. Für die Konzentration und den Aufbau der pastösen Massen, aus denen diese Schichten gebildet werden, gilt das voranstehend für die Elektroden und Elektrolyte Gesagte selbstverständlich ebenfalls. Eine Ausgestaltung mit Ableitelektroden und Zwischentapes (siehe auch Figur 1) besitzt, wenn sie z.B. in der erwähnten Lithiumtechnologie hergestellt ist, Lade- und Entladekurven, wie sie in **Figur 3** dargestellt sind.

Die elektrochemischen Bauelemente der vorliegenden Erfindung können beispielsweise in einem kunststoffbasierten Gehäuse versiegelt werden. Gegenüber Metallgehäusen wird hier das Gewicht vorteilhaft verringert; Vorteile ergeben sich weiterhin für die Energiedichte.

Der elektrochemische Schichtverbund (das elektrochemische Bauelement) kann auch zwischen zwei oder mehr Folien aus einem mit Wachs oder Paraffin beschichteten Kunststoff eingebettet werden. Diese Materialien wirken als Versiegelung und können zusätzlich aufgrund ihrer inhärenten Eigenschaften mechanischen Druck auf den Schichtverbund ausüben, wodurch in vorteilhafter Weise eine Kontaktverbesserung im Schichtverbund durch Preßwirkung erzielt wird.

Während das elektrochemische Bauelement wie vorstehend oder auf andere Weise versiegelt wird, kann man das Innere mit einem vorgegebenen Wasser-/Sauerstoff-Partialdruck beaufschlagen, der eine hohe elektrochemische Stabilität bewirkt. Dies läßt sich beispielsweise durch das Versiegeln des elektrochemischen Elementes in einer solchen Umgebung mit entsprechend eingestellten und gewählten Parametern bewirken.

Wenn, was bei manchen Ausgestaltungen der Fall sein kann, im Verlauf des Fertigungsprozesses Feuchtigkeit in den Folienverbund gelangt ist, die langfristig unerwünschte Folgen hat, so kann der Verbund vor dem Versiegeln in einem Gehäuse oder dgl. unter Vakuum gebracht und dabei ggf. einer erhöhten Temperatur ausgesetzt werden, um die Feuchtigkeit wieder auszutreiben.

In einer speziellen Ausgestaltung der Erfindung wird ein dreischichtiges System für einen wiederaufladbaren Akkumulator wie voranstehend beschrieben gewählt, wobei den Schichten ein Zusatz beigegeben wird, der sich beim Laden zersetzt. Die Zersetzungsprodukte bilden an den Grenzflächen mit dort vorhandenen elektrochemisch aktivierbaren Bestandteilen (B) oder (C) neue Verbindungen, wobei dann, wenn diese Zersetzungsprodukte Ionenleiter sind, tatsächlich ein 5-schichtiges System entsteht. Ein Beispiel hierfür ist der Zusatz von Ether, der an den Grenzflächen eines Akkumulators in Lithiumtechnologie Lithium-Organyle ausbildet. Auch polymere Bestandteile der Matrix, Plastifizierer, Viskositätsverbesserer und/oder beim Verarbeiten eingedrungenes Restwasser können in entsprechende Ausgestaltungen derart zersetzt oder teilzersetzt werden.

In einer anderen Ausgestaltung der vorliegenden Erfindung wird als Elektrolytschicht eine Schicht gewählt, die aus zwei miteinander laminierten Folien unterschiedlicher Zusammensetzung besteht, die jeweils an die Elektrode angepaßt sind, mit der sie Kontakt haben. Dies wirkt sich vorteilhaft auf die Stabilität der Phasengrenzen zwischen positiver Elektrode und Elektrolyt 1 sowie negativer Elektrode und Elektrolyt 2 aus. Als konkretes Beispiel für diese Ausgestaltung sei die Verwendung von Lithiumjodid als Elektrolytmaterial der ersten Schicht und $Li_{1,3}Al_{0,3}Ti_{1,7}(PO_4)_3$ als Elektrolytmaterial der zweiten Schicht aus.

Als Beispiel für eine galvanische Zelle mit elektrochromen Eigenschaften sei eine Schichtenfolge genannt, die aus der folgenden Sequenz besteht:
Leiter 1/Y/MeX-Alkoholat/$WO_3$/Leiter 2.

In dieser Sequenz kann das Metall Me z.B. unter Lithium, Natrium, Kalium, Rubidium und Cäsium ausgewählt werden, dessen Anion X z.B. unter den Halogeniden Chlorid, Bromid und Jodid. Der Leiter 1 kann z.B. ausgewählt sein unter Indium-Zinn-Oxid (ITO), Zink-Aluminium-Oxid ($Zn_xAl_yO_z$) und Silber. Der Leiter 2 kann z.B. ausgewählt sein unter Indium-Zinn-Oxid (ITO) und Zink-Aluminium-Oxid ($Zn_xAl_yO_z$).

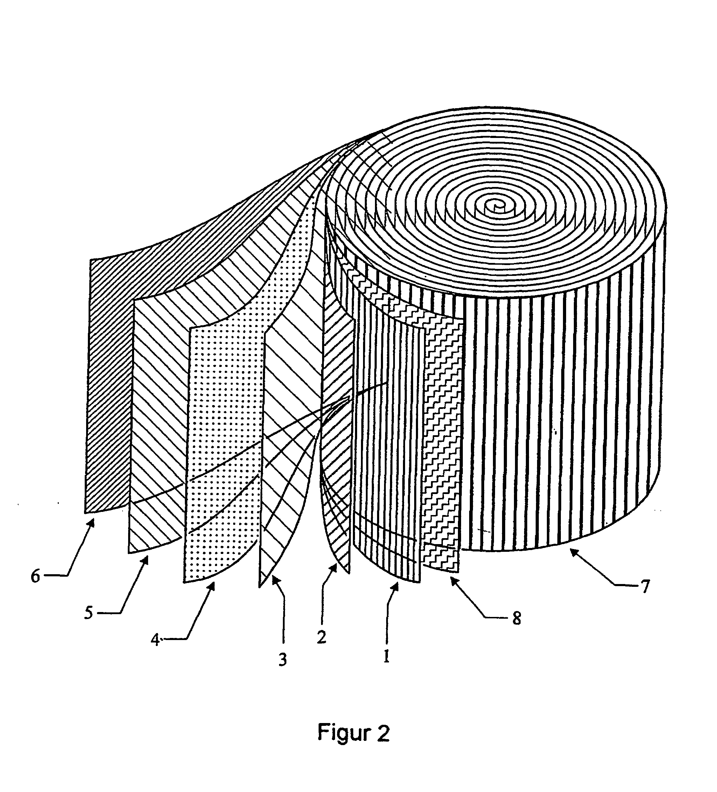

Die erfindungsgemäßen Schichtfolgen der elektrochemischen Bauelemente können in beliebiger Form angeordnet werden. Beispielsweise können die flexiblen Schichtverbünde aufgerollt werden, wodurch eine besonders vorteilhafte Geometrie für kompakte Akkumulatoren erzielt wird. Bei kleinem Bauvolumen des Akkumulators ist hier eine sehr große batterieaktive Fläche vorhanden. **Figur 2** zeigt eine solche Ausgestaltung, wobei die Bezugszeichen 1 bis 7 die für Figur 1 genannten Bedeutungen besitzen und Bezugszeichen 8 eine Isolatorschicht bezeichnet.

Nicht-selbsttragende Schichtverbünde können auch auf festen Untergründen wie Wänden zur integrierten Energiespeicherung aufgetragen werden (selbsttragende Folienverbände können natürlich ebenfalls aufgebracht bzw. aufgeklebt werden). Hier können große Flächen ausgenutzt werden; ein eigener Raumbedarf für die Akkumulatoren ist nicht gegeben. Ein spezielles Beispiel für eine derartige Ausgestaltung ist die Integration von Schichtverbünden für Akkumulatoren in Substrate für Solarzellen. Hierdurch können autarke Energieversorgungseinheiten geschaffen werden. Schichtsequenzen für Akkumulatoren können auch auf feste oder flexible Substrate aufgebracht werden, um in elektronischen Aufbauten der integrierten Energiespeicherung zu dienen.

Nachstehend sollen konkrete Beispiele die Erfindung näher erläutern:

Beispiel 1

Für die Herstellung einer positiven Elektrode werden 0,8 g PVC mit 1,2 g Dibutylphthalat und 8 g Aceton zusammengegeben. 3 bis 6 g $LiMn_2O_4$ und 0,5 bis 0,75 g C werden in Form feiner Pulver zugesetzt, worauf die Bestandteile durch starkes Rühren innig vermischt werden. Anschließend wird die erhaltene pastöse Masse auf ein Substrat ausgestrichen und getrocknet.

Beispiel 2

Eine Elektrolytschicht wird hergestellt, indem 0,8 bis 1 g PVDF-HFP, 1,2 bis 1,5 g Dibutylphthalat und 14 g Aceton innig vermischt werden. 2,5 bis 4 g $LigAlSiO_8$ und 0,35 bis 0,5 g Lil werden in fein pulverisierter Form zugegeben, worauf durch kräftiges Rühren eine innige Mischung erreicht wird. Die weitere Bearbeitung erfolgt wie in Beispiel 1 beschrieben.

Beispiel 3

Zur Herstellung einer negativen Elektrode wird 1 g Polystyrol mit 1,5 bis 1,8 g Dioctylphthalat und 15 g Aceton zusammengegeben. Nach einiger Zeit werden 5 g Graphit zugesetzt, und das Gemisch wird zum Erzeugen einer innigen Mischung für einige Zeit kräftig gerührt. Die Weiterverarbeitung erfolgt wie in Beispiel 1.

Beispiel 4

Beispiel 1 wurde wiederholt, wobei jedoch anstelle von 1,2 g Dibutylphthalat 0,3 g Ethylencarbonat eingesetzt wurden. Man kann dieses Beispiel mit einer Menge von bis zu 0,6 g Ethylencarbonat ausführen.

Beispiel 5

Beispiel 2 wurde wiederholt, wobei jedoch anstelle von Dibutylphthalat 0,25 bis 0,4 g Ethylencarbonat und 0,05 bis 0,2 g Lil eingesetzt wurden.

Beispiel 6

Beispiel 3 wurde wiederholt, wobei jedoch anstelle von Dioctylphthalat 0,5 g Ethylencarbonat eingesetzt wurden.

Beispiel 7

Für die Herstellung einer Anode werden 1,5 g PVDF-HFP mit 0,6 g Ethylencarbonat und 40 g Aceton zusammengegeben. 6 g Graphit werden in feinpulvriger Form zugegeben, worauf die Bestandteile durch starkes Rühren innig vermischt werden. Anschließend wird die erhaltene pastöse Masse auf ein Substrat ausgestrichen und getrocknet. Aceton und Ethylencarbonat können anschließend nach gängigen Verfahren oder z.B. bei vorzugsweise 60 bis 90°C in einem Vakuumtrockenschrank (ca. $10^{-2}$ mbar) entfernt werden.

Beispiel 8

Beispiel 7 wurde wiederholt, wobei zusätzlich jedoch bis zu 2,8 g Acetylenblack der Mischung zugesetzt wurden.

Beispiel 9

Eine Elektrolytschicht wird hergestellt, indem 12 g PVDF-HFP, 3,6 g Ethylencarbonat und 90 g Aceton innig vermischt werden. 36 g $LiAlSiO_4$ (Spodumen) werden in fein pulverisierter Form zugegeben, worauf durch kräftiges Rühren eine innige Mischung erreicht wird. Die weitere Bearbeitung erfolgt wie in Beispiel 1 beschrieben.

Beispiel 10

Zur Herstellung einer Kathode werden 2 g PVDF-HFP mit 0,8 g Ethylencarbonat und 40 g Aceton zusammengegeben. Nach einiger Zeit werden 8 g $LiCoO_2$ und 1,2 g Acetylenblack zugesetzt, und das Gemisch wird zum Erzeugen einer innigen Mischung für einige Zeit kräftig gerührt. Die Weiterverarbeitung erfolgt wie in Beispiel 1.

Beispiel 11 - 13

Die Folienmaterialien der voranstehenden Beispiele 1 bis 3 können auch unter Weglassen von Lösungsmittel und Weichmacher hergestellt werden, wobei das Vermischen der Bestandteile bei geeigneten Temperaturen erfolgt. Die in der Wärme pastöse Masse wird dann mit Hilfe gängiger Heißauszieh- oder Preßverfahren in die Form einer Folie gebracht.

**Patentansprüche**

1. In elektrochemischen Bauelementen verwendbare, pastöse Masse, umfassend eine heterogene Mischung aus

   (A) einer mindestens ein organisches Polymer, dessen Vorstufen oder dessen Präpolymere enthaltenden oder hieraus bestehenden Matrix und
   (B) einem elektrochemisch aktivierbaren, in der Matrix nicht löslichen, anorganischen Material in Form einer Festsubstanz, wobei entweder

   (a) die Mischung aus mindestens etwa 60 Vol.-% (B) besteht und, sofern (B) ein Elektrodenmaterial ist, (B) ohne Zuhilfenahme eines Lösungsoder Quellmittels für das organische Polymer, dessen Vorstufen oder dessen Präpolymere in die Matrix (A) eingearbeitet wurde
   und/oder
   (b) die Mischung aus mindestens etwa 60 Vol.-% (B) besteht und, sofern (B) ein Elektrodenmaterial ist, herstellbar ist, indem (B) in eine Matrix (A) eingearbeitet wurde, die weiterhin einen Plastifizierer für das organische Polymer enthält, und dieser Plastifizierer anschließend durch ein geeignetes Lösungsmittel entfernt wurde, und/oder
   (c) die Mischung zusätzlich

   (C) einen festen, von (B) verschiedenen Ionen- und/oder gemischten Leiter enthält, der zumindest an den Korngrenzen zwischen (A) und (B) als dünne Schicht vorhanden ist,

   mit der Maßgabe, daß die pastöse Masse keinen lithiierten Zeolithen und keine elektronen- oder ioneneleitenden organischen Polymere enthält.

2. Pastöse Masse nach Anspruch 1(a) oder 1(c), **dadurch gekennzeichnet, daß** die Matrix (A) zusätzlich einen Plastifizierer enthält.

3. Pastöse Masse nach Anspruch 2, **dadurch gekennzeichnet, daß** der Ionenleiter (C) im Plastifizierer für die Matrix (A) löslich ist.

4. Pastöse Masse nach Anspruch 1(b) oder 1(c), **dadurch gekennzeichnet, daß** die Matrix (A) weiterhin ein Lösungs- oder Quellmittel für das organische Polymer, dessen Vorstufen oder dessen Präpolymere enthält.

5. Pastöse Masse nach Anspruch 4, **dadurch ge-**

**kennzeichnet, daß** der Leiter (C) in dem Lösungs- oder Quellmittel löslich ist.

6. Pastöse Masse nach einem der voranstehenden Ansprüche, **dadurch gekennzeichnet, daß** die Matrix (A) ein vernetzbares, flüssiges oder weiches Harz ist oder ein solches enthält.

7. Pastöse Masse nach einem der Ansprüche 1 bis 6, **dadurch gekennzeichnet, daß** das organische Polymere der Matrix (A) ausgewählt ist unter natürlichen Polymeren und synthetischen Polymeren sowie Mischungen hiervon, insbesondere natürlichen und synthetischen Polysacchariden, Proteinen, Harzen, Wachsen und halogenierten und nichthalogenierten Kautschuken, Thermoplasten und Thermoelastomeren.

8. Pastöse Masse nach einem der Ansprüche 1 bis 7, **dadurch gekennzeichnet, daß** die Matrix (A) mindestens ein in einem Lösungsmittel bzw. Quellmittel mindestens teilweise gelöstes bzw. gequollenes organisches Polymer enthält oder daraus besteht und das organische Polymer ausgewählt ist unter. synthetischen Polymeren und natürlichen Polymeren sowie Mischungen hiervon.

9. Pastöse Masse nach einem der voranstehenden Ansprüche, **dadurch gekennzeichnet, daß** das elektrochemisch aktivierbare Material (B) ausgewählt ist unter Substanzen, die sich als positives Elektrodenmaterial eignen oder Substanzen, die sich als negatives Elektrodenmaterial eignen oder Substanzen, die sich als Festkörperelektrolyte eignen oder Substanzen, die sich als elektrochrom aktive Elektrodenmaterialien eignen oder Substanzen, die sich als ionische oder elektronische Zwischenieiter zwischen zwei in einem elektrochemischen Bauelement benachbart anordbaren solcher Substanzen oder Materialien eignen.

10. Pastöse Masse nach einem der Ansprüche 1 bis 9, worin (B) ein Metallpulver in Kombination mit einem Alkali- oder Erdalkalisalz ist.

11. Selbsttragende oder auf einem Substrat aufliegende Schicht, umfassend eine heterogene Mischung aus

(A) einer mindestens ein organisches Polymer enthaltenden oder hieraus bestehenden Matrix wie in einem der Ansprüche 1 bis 10 definiert und

(B) einem elektrochemisch aktivierbaren, in der Matrix nicht löslichen, anorganischen Material in Form einer Festsubstanz, wie in einem der Ansprüche 1 bis 15 definiert, wobei entweder

(a) die Mischung aus mindestens etwa 60 Vol.-% (B) besteht und, sofern (B) ein Elektrodenmaterial ist, (B) ohne Zuhilfenahme eines Lösungs- oder Quellmittels für das organische Polymer, dessen Vorstufen oder dessen Präpolymere in die Matrix (A) eingearbeitet wurde und/oder

(b) die Mischung aus mindestens etwa 60 Vol.% (B) besteht und, sofern (B) ein Elektrodenmaterial ist, herstellbar ist, indem (B) in eine Matrix (A) eingearbeitet wurde, die weiterhin einen Plastifizierer für das organische Polymer enthält, und dieser Plastifizierer anschließend durch ein geeignetes Lösungsmittel entfernt wurde, und/oder

(c) die Mischung zusätzlich

(C) einen festen, von (B) verschiedenen Ionen- und/oder gemischten Leiter enthält, der zumindest an den Komgrenzen zwischen (A) und (B) als dünne Schicht vorhanden ist und der wie in einem der Ansprüche 1 bis 10 definiert ist,

mit der Maßgabe, daß die selbsttragende oder auf einem Substrat aufliegende Schicht keinen lithiierten Zeolithen und keine elektronen- oder ionenleitenden organischen Polymere enthält.

12. Selbsttragende oder auf einem Substrat aufliegende Schicht nach Anspruch 11, **dadurch gekennzeichnet, daß** die Schicht eine flexible Schicht ist.

13. Schichtverbund mit elektrochemischen Eigenschaften, umfassend

(1.) eine Schicht gemäß einem der Ansprüche 11 oder 12, worin das elektrochemisch aktivierbare anorganische Material (B) unter solchen Substanzen ausgewählt ist, die als Materialien für positive Elektroden geeignet sind, und/oder
(2.) eine Schicht gemäß einem der Ansprüche 11 oder 12, worin das elektrochemisch aktivierbare, anorganische Material (B) ausgewählt ist unter Substanzen mit Festkörperelektrolyt-Eigenschaften, und/oder
(3.) eine Schicht gemäß einem der Ansprüche 11 oder 12, worin das elektrochemisch aktivierbare anorganische Material (B) unter solchen Substanzen ausgewählt ist, die als Materialien für negative Elektroden geeignet sind.

14. Wiederaufladbare, elektrochemische Zelle in Dickschichttechnologie, umfassend einen Schichtverbund mit elektrochemischen Eigenschaften nach Anspruch 13.

**15.** Wiederaufladbare, elektrochemische Zelle nach Anspruch 14, **dadurch gekennzeichnet, daß** der Schichtverbund aus eng aufgerollten Schichten besteht.

**16.** Verfahren zum Herstellen einer pastösen Masse nach einem der Ansprüche 1 bis 10, **dadurch gekennzeichnet, daß** das organische Polymer, dessen Vorstufen oder dessen Präpolymere mit einem Plastifiziermittel und einem elektrochemisch aktivierbaren Material (B) zusammengegeben und innig vermischt werden, anschließend ein Lösungsmittel zugegeben wird, in dem sich hauptsächlich der Plastifizierer löst, und schließlich der in dem Lösungsmittel gelöste Plastifizierer aus der Masse herausgewaschen und die Masse ggf. vom Lösungsmittel befreit wird.

**17.** Verfahren zum Herstellen einer selbsttragenden oder aufliegenden Schicht nach einem der Ansprüche 11 oder 12, **dadurch gekennzeichnet, daß** als pastöse Masse eine solche eingesetzt wird, deren Matrix (A) aus einem vernetzbaren Polymeren oder Präpolymeren besteht und die aus dieser pastösen Masse erzeugte Schicht anschließend einer Vernetzung der Polymerkomponente unterzogen wird, die photochemisch, durch Elektronenstrahlen oder durch Wärme oder durch Eintauchen der Schicht in ein chemisches Vernetzungsmittel bewirkt wird.

**18.** Verfahren zum Herstellen eines Schichtverbundes nach Anspruch 13, **dadurch gekennzeichnet, daß** die jeweils für eine Schicht vorgesehenen pastösen Massen nacheinander mit Hilfe eines Pastenauftragsverfahrens, besonders bevorzugt mit Hilfe eines Druckverfahrens, auf einem Substrat aufgebracht werden und die Schichten anschließend in ihren endverfestigten Zustand gebracht werden.

**Claims**

**1.** Paste-like mass that can be used in electrochemical elements, comprising a heterogeneous mixture of

(A) a matrix containing or comprising of at least one organic polymer, precursors thereof, or prepolymers thereof, and
(B) an electrochemically activatable inorganic material that is not soluble in said matrix and that is in the form of a solid substance, wherein either

a) said mixture comprises at least approximately 60 vol. % (B) and, if (B) is an electrode material, (B) is incorporated into said matrix (A) without using a solvent or swelling agent for said organic polymer, its precursors, or its prepolymers
and/or
b) said mixture comprises at least approximately 60 vol. % (B) and, if (B) is an electrode material, can be produced in that (B) is incorporated into a matrix (A) that also contained a plasticizer for said organic polymer, and said plasticizer was subsequently removed, using a suitable solvent, and/or
c) said mixture additionally

(C) contains a solid ion and/or mixed conductor that is different from (B) and that is present at least at the grain limits between (A) and (B) as a thin layer,

provided said paste-like mass contains no lithium-containing zeolites and furthermore contains no electron- or ion-conducting organic polymers.

**2.** Paste-like mass in accordance with claim 1 (a) or 1 (c), **characterized in that** said matrix (A) also contains a plasticizer.

**3.** Paste-like mass in accordance with claim 2, **characterized in that** said ion conductor (C) is soluble in said plasticizer for said matrix (A).

**4.** Paste-like mass in accordance with claim 1(b) or 1 (c), **characterized in that** said matrix (A) furthermore contains a solvent or swelling agent for said organic polymer, its precursors, or its prepolymers.

**5.** Paste-like mass in accordance with claim 4, **characterized in that** said conductor (C) is soluble in said solvent or swelling agent.

**6.** Paste-like mass in accordance with any of the preceding claims, **characterized in that** said matrix (A) is or contains a cross-linkable liquid or soft resin.

**7.** Paste-like mass in accordance with any of claims 1 through 6, **characterized in that** said organic polymer of said matrix (A) is selected from among natural polymers and synthetic polymers and mixtures thereof, especially natural and synthetic polysaccharides, proteins, resins, waxes, and halogenated and non-halogenated rubbers, thermoplasts, and thermoelastomers.

**8.** Paste-like mass in accordance with any of claims 1 through 7, **characterized in that** said matrix (A) contains or comprises at least one organic polymer that is at least partially dissolved or swollen in a solvent or swelling agent and said organic polymer is selected from among synthetic polymers and natural polymers and mixtures thereof.

9.  Paste-like mass in accordance with any of the preceding claims, **characterized in that** said electrochemically activatable material (B) is selected from among substances that are suitable for positive electrode material or from among substances that are suitable as negative electrode material or from among substances that are suitable as solid body electrolytes or from among substances that are suitable as electrochemically active electrode materials or from among substances that are suitable as ionic or electronic intermediate conductors between two such substances or materials that are arranged adjacent in an electrochemical element.

10. Paste-like mass in accordance with any of claims 1 through 9, wherein (B) is a metal powder in combination with an alkali or earth alkali salt.

11. Self-supporting layer or layer that is placed on a substrate, comprising a heterogeneous mixture of

    (A) a matrix containing or comprising of at least one organic polymer as defined in any of claims 1 through 10 and
    (B) an electrochemically activatable inorganic material that is not soluble in said matrix and that is in the form of a solid substance, as defined in any of claims 1 through 15,
    wherein either

    a) said mixture comprises at least approximately 60 vol. % (B) and, if (B) is an electrode material, (B) is incorporated into said matrix (A) without using a solvent or swelling agent for said organic polymer, its precursors, or its prepolymers,
    and/or
    b) said mixture comprises at least approximately 60 vol. % (B) and, if (B) is an electrode material, can be produced in that (B) is incorporated into a matrix (A) that also contained a plasticizer for said organic polymer, and said plasticizer was subsequently removed using a suitable solvent,
    and/or
    c) said mixture additionally

    (C) contains a solid ion and/or mixed conductor that is different from (B) and that is present at least at the grain limits between (A) and (B) as a thin layer and that is defined as in any of claims 1 through 10,

    provided said self-supporting layer or layer that is placed on a substrate contains no lithium-containing zeolites and furthermore contains no electron- or ion-conducting organic polymers.

12. Self-supporting layer or layer that is placed on a substrate in accordance with claim 11, **characterized in that** said layer is a flexible layer.

13. Composite layer having electrochemical properties, comprising

    (1.) one layer in accordance with any of claims 11 or 12, wherein said electrochemically activatable inorganic material (B) is selected from among substances that are suitable as materials for positive electrodes, and/or
    (2.) one layer in accordance with any of claims 11 or 12, wherein said electrochemically activatable inorganic material (B) is selected from among substances having solid body electrolyte properties, and/or
    (3.) one layer in accordance with any of claims 11 or 12, wherein said electrochemically activatable inorganic material (B) is selected from among substances that are suitable as materials for negative electrodes.

14. Rechargeable electrochemical cell in thick layer technology, comprising a composite layer with electrochemical properties in accordance with claim 13.

15. Rechargeable electrochemical cell in accordance with claim 14, **characterized in that** said composite layer comprises tightly rolled layers.

16. Method for manufacturing a paste-like mass in accordance with any of claims 1 through 10, **characterized in that** said organic polymer, its precursors, or its prepolymers are combined with a plasticizer and an electrochemically activatable material (B) and thouroughly mixed, a solvent is subsequently added in which mainly said plasticizer dissolves, and then said plasticizer dissolved in said solvent is washed out of said mass and the solvent is optionally removed from said mass.

17. Method for producing a self-supporting layer or supported layer in accordance with any of claims 11 or 12, **characterized in that** used for said paste-like mass is a mass the matrix (A) of which consists of a cross-linkable polymer or prepolymer and said layer produced form said paste-like mass is then subjected to cross-linking of the polymer component, which is effected photochemically, by electron radiation, or by heating or immersing said layer in a chemical cross-linking agent.

18. Method for producing a composite layer in accordance with claim 13, **characterized in that** each paste-like mass provided for a layer is sequentially applied to a substrate using a paste application method, particularly preferably using a pressure method, and said layers are then brought into their final consolidated state.

## Revendications

**1.** Masse pâteuse utilisable dans des éléments de construction électrochimiques, comprenant un mélange hétérogène constitué de :

A) une matrice contenant au moins un polymère organique, ses stades de formation préliminaires ou ses pré-polymères, ou constituée de ce(s) dernier(s), et
B) une matière inorganique, non soluble dans la matrice, électrochimiquement activable sous la forme d'une substance solide,
dans laquelle ou bien,

a) le mélange est constitué d'au moins environ 60 % en volume (B) et, dans la mesure où (B) est une matière d'électrode, (B) a été incorporé dans la matrice (A) sans l'aide d'un solvant ou d'un agent gonflant pour le polymère organique, ses stades de formation préliminaires ou ses pré-polymères,
et / ou bien
b) le mélange est constitué d'au moins environ 60 % en volume (B) et, dans la mesure où (B) est une matière d'électrode, peut être fabriqué par incorporation de (B) dans une matrice (A), qui contient en outre un plastifiant pour le polymère organique, ce plastifiant étant ensuite éliminé au moyen d'un solvant approprié,
et/ou bien
c) le mélange contient en outre

C) un conducteur d'ions et/ou mixte, solide, différent de (B), qui est présent au moins aux limites des grains entre (A) et (B) sous la forme d'une couche mince,

avec la précision que la masse pâteuse ne contient pas de zéolithes lithiées et pas de polymères organiques conducteurs des électrons ou des ions.

**2.** Masse pâteuse selon la revendication 1(a) ou 1(c), **caractérisée en ce que** la matrice (A) contient en outre un plastifiant.

**3.** Masse pâteuse selon la revendication 2, **caractérisée en ce que** le conducteur d'ions (C) est soluble dans le plastifiant pour la matrice (A).

**4.** Masse pâteuse selon la revendication 1(b) ou 1(c), **caractérisée en ce que** la matrice (A) contient en outre un solvant ou un agent gonflant pour le polymère organique, ses stades de formation préliminaires ou ses pré-polymères.

**5.** Masse pâteuse selon la revendication 4, **caractérisée en ce que** le conducteur (C) est soluble dans le solvant ou l'agent gonflant.

**6.** Masse pâteuse selon l'une quelconque des revendications précédentes, **caractérisée en ce que** la matrice (A) est une résine réticulable, liquide ou molle ou contient une telle résine.

**7.** Masse pâteuse selon l'une quelconque des revendications 1 à 6, **caractérisée en ce que** le polymère organique de la matrice (A) est choisi parmi des polymères naturels et des polymères synthétiques ainsi que leurs mélanges, en particulier des polysaccharides naturels et synthétiques, des protéines, des résines, des cires et des caoutchoucs halogénés et non halogénés, des thermoplastes et des thermo-élastomères.

**8.** Masse pâteuse selon l'une quelconque des revendications 1 à 7, **caractérisée en ce que** la matrice (A) contient au moins un polymère organique au moins partiellement dissous ou gonflé dans un solvant ou un agent gonflant, ou est constitué de ce dernier et le polymère organique est choisi parmi des polymères synthétiques et des polymères naturels ainsi que leurs mélanges.

**9.** Masse pâteuse selon l'une quelconque des revendications précédentes, **caractérisée en ce que** la matière électrochimiquement activable (B) est choisie parmi des substances qui conviennent comme matière d'électrode positive ou des substances qui conviennent comme matière d'électrode négative ou des substances qui conviennent comme électrolyte solide ou des substances qui conviennent comme matières d'électrodes actives électro-chromes, ou des substances qui conviennent comme conducteurs intermédiaires ioniques ou électroniques entre deux substances ou matériaux de ce genre pouvant être disposé(e)s l'un(e) à côté de l'autre dans un élément de construction électrochimique.

**10.** Masse pâteuse selon l'une quelconque des revendications 1 à 9, dans laquelle (B) est une poudre métallique en combinaison avec un sel alcalin ou alcalino-terreux.

**11.** Couche auto-portante ou reposant sur un substrat, comprenant un mélange hétérogène constitué de:

A) une matrice contenant au moins un polymère organique ou constituée de ce dernier, comme défini dans l'une quelconque des revendications 1 à 10, et

B) une matière inorganique, non soluble dans la matrice, électrochimiquement activable, sous la forme d'une substance solide, comme défini dans l'une quelconque des revendications 1 à 10,

dans laquelle ou bien

a) le mélange est constitué d'au moins environ 60% en volume (B) et, dans la mesure où (B) est une matière d'électrode, (B) a été incorporé sans l'aide d'un solvant ou d'un agent gonflant pour le polymère organique, ses stades de formation préliminaires ou ses pré-polymères, dans la matrice (A),

et /ou bien

b) le mélange est constitué d'au moins 60 % en volume (B) et, dans la mesure où (B) est une matière d'électrode, peut être fabriqué par incorporation de (B) dans une matrice (A) qui contient en outre un plastifiant pour le polymère organique, ce plastifiant étant ensuite éliminé au moyen d'un solvant approprié,

et/ou bien

c) le mélange contient en outre:

C) un conducteur d'ions et/ou mixte, différent de (B), solide, qui est présent au moins aux limites des grains entre (A) et (B) sous la forme d'une couche mince et qui est défini comme dans l'une quelconque des revendications 1 à 10, avec la précision que la couche auto-portante ou reposant sur un substrat ne contient pas de zéolithes lithiées et pas de polymère organique conducteur d'électrons ou d'ions.

12. Couche auto-portante ou reposant sur un substrat selon la revendication 11, **caractérisée en ce que** cette couche est une couche flexible.

13. Composite stratifié présentant des propriétés électrochimiques, comprenant :

1) une couche selon l'une ou l'autre des revendications 11 ou 12, dans laquelle la matière inorganique électrochimiquement activable (B) est choisie parmi des substances qui conviennent comme matières pour électrodes positives et/ou

2) une couche selon l'une ou l'autre des revendications 11 ou 12, dans laquelle la matière inorganique, électrochimiquement activable (B) est choisie parmi des susbtances présentant des propriétés d'électrolyte solide, et/ou

3) une couche selon l'une ou l'autre des revendications 11 ou 12, dans laquelle la matière inorganique électrochimiquement activable (B) est choisie parmi des substances qui conviennent comme matières pour électrodes négatives.

14. Cellule électrochimique, rechargeable, réalisée selon la technologie des couches épaisses, comprenant un composite stratifié présentant des propriétés électrochimiques selon la revendication 13.

15. Cellule électrochimique, rechargeable, selon la revendication 14, **caractérisée en ce que** le composite stratifié est constitué de couches étroitement enroulées les unes sur les autres.

16. Procédé pour la préparation d'une masse pâteuse selon l'une quelconque des revendications 1 à 10, **caractérisé en ce que** le polymère organique, ses stades de formation préliminaires ou ses pré-polymères sont réunis et intimement mélangés avec un plastifiant et une matière électrochimiquement activable (B), ensuite un solvant est ajouté dans lequel le plastifiant principalement se dissout, et enfin le plastifiant dissous dans le solvant est éliminé de la masse par lavage et la masse est, le cas échéant, débarrassée du solvant.

17. Procédé pour la préparation d'une couche auto-portante ou reposant sur un substrat selon l'une ou l'autre des revendications 11 ou 12, **caractérisé en ce que** l'on utilise comme masse pâteuse une masse dont la matrice (A) est constituée d'un polymère ou d'un pré-polymère réticulable et la couche produite à partir de cette masse pâteuse est ensuite soumise à une réticulation du composant polymère, qui est provoquée par voie photo-chimique, par faisceau d'électrons ou par la chaleur ou par immersion de la couche dans un agent de réticulation chimique.

18. Procédé pour la préparation d'un composite stratifié selon la revendication 13, **caractérisé en ce que** les masses pâteuses prévues à chaque fois pour une couche sont appliquées les unes après les autres sur un substrat à l'aide d'un procédé d'application de pâte, de manière particulièrement préférée à l'aide d'un procédé faisant intervenir la pression et les couches sont ensuite mises dans leur état solidifié final.

Figur 1

Figur 2

Figur 3

Figur 4a

Figur 4b